**Europäisches Patentamt**

**European Patent Office**

**Office européen des brevets**

(19)

(11) Veröffentlichungsnummer : **0 054 849**
**B1**

(12) # EUROPÄISCHE PATENTSCHRIFT

(45) Veröffentlichungstag der Patentschrift :
**15.05.85**

(21) Anmeldenummer : **81110307.6**

(22) Anmeldetag : **10.12.81**

(51) Int. Cl.⁴ : **G 01 N 35/00**

---

(54) **Vorrichtung zum Transport streifenförmigen Testguts unter eine Messeinrichtung.**

---

(30) Priorität : **18.12.80 DEU 8033593**

(43) Veröffentlichungstag der Anmeldung :
**30.06.82 Patentblatt 82/26**

(45) Bekanntmachung des Hinweises auf die Patenterteilung : **15.05.85 Patentblatt 85/20**

(84) Benannte Vertragsstaaten :
**AT BE CH DE FR IT LI NL SE**

(56) Entgegenhaltungen :
**GB-A- 2 014 113**
**US-A- 3 776 700**
**US-A- 3 980 437**
**US-A- 4 218 421**

(73) Patentinhaber : **BEHRINGWERKE AKTIENGESELL-SCHAFT**
**Postfach 1140**
**D-3550 Marburg/Lahn (DE)**

(72) Erfinder : **Spitzer, Wolfgang**
**Hedtwigsweg 4**
**D-6310 Grünberg-Stockhausen (DE)**

(74) Vertreter : **Meyer-Dulheuer, Karl-Hermann, Dr. et al**
**HOECHST Aktiengesellschaft Zentrale Patentabteilung Postfach 80 03 20**
**D-6230 Frankfurt/Main 80 (DE)**

EP 0 054 849 B1

---

## Beschreibung

Die Anmeldung betrifft eine Vorrichtung zum Transport streifenförmiger Objekte in eine definierte Lage unter eine Meßeinrichtung.

Bekannt ist ein Gerät, welches Teststreifen auf einem Schlitten in Längsrichtung unter einem Meßkopf hindurchbewegt.

In der DE-A-28 03 849 ist ein Gerät beschrieben, in welchem die Teststreifen parallel zur Achse in Vertiefungen einer Walze eingelegt werden, welche die Streifen unter einem Meßkopf hindurchbewegt, der verschiebbar geführt ist und so die Streifen in ihrer Länge abtasten kann.

Nachteilig bei dem ersten Gerät ist der, auch wegen der beim Gebrauch von Teststreifen einzuhaltenden Inkubationszeit, große Zeitbedarf für eine Messung, der es für Reihenuntersuchungen ungeeignet macht, beim zweiten sind es Probleme beim Einlegen, da die Teststreifen häufig leicht gebogen sind, sowie die Festlegung des maximalen Teststreifendurchsatzes durch die methodenbestimmte Inkubationszeit.

Beiden Geräten gemeinsam sind hygienische Mängel — die Vorrichtungselemente, welche die Teststreifen aufnehmen, werden verunreinigt und müssen gereinigt werden — und die Gefahr der Verschleppung von Testflüssigkeit auf die nachfolgenden Teststreifen. Beim erstgenannten Gerät müssen die Streifen außerdem zweimal angefaßt werden.

In der US-A-3,980,437 ist eine weitere Vorrichtung beschrieben, die eine bandförmige Vorrichtung für Teststreifen aufweisen kann. Diese Vorrichtung besitzt jedoch keine Einrichtung zum Justieren der Teststreifen quer zur Transportrichtung des Bandes.

Aufgabe der vorliegenden Anmeldung war es daher, ein Auswertegerät für Teststreifen zu entwickeln, das ein einfaches Einlegen der Teststreifen erlaubt, das Ausrichten und Justieren der Teststreifen unter der Meßeinrichtung gewährleistet und Kontaminationen von Teststreifen zu Teststreifen verhindert.

Die Lösung dieser Aufgabe wird in einer Vorrichtung zum Transport streifenförmiger Objekte in eine definierte Lage unter einer Meßeinrichtung mittels eines Transportbandes zur Aufnahme der Objekte gesehen, die gekennzeichnet ist durch eine Kurbelwelle (13), die über Pleuel (14) eine quer zur Bandrichtung angeordnete Barriere (12) in vertikaler Richtung bewegt und zur Ausrichtung der Objekte in Querrichtung zum Transportband (1) auf dieses absenkt, und die eine gegen die Vertikale geneigte Fläche (16) in vertikaler Richtung zur Verschiebung der Objekte in Querrichtung zum Transportband bewegt.

Eine Ausführungsform der Vorrichtung der Erfindung besteht aus den folgenden wesentlichen Bestandteilen (Zeichnungen 1 und 2) :

Ein Transportband (1), das von einer Vorratsrolle (2) über eine Umlenkrolle (3) über einen Tisch (4) unter einer Meßeinrichtung (5) zwischen einer Transportwalze (6) und einer Andruckwalze (7) hindurch an einer Schneideinrichtung (8) zu einer Aufwickelstation (9) geführt ist. Die Meßeinrichtung (5) besteht aus einem Meßkopf (10), der von zwei Justiergreifern (11) getragen wird, welche an den seitlichen Enden je einen Vorsprung besitzen, auf denen die Barriere (12) aufliegt. Eine Kurbelwelle (13) und Pleuel (14), die vorzugsweise durch Kugelbüchsen (15) geführt sind, und an denen die Greifer befestigt sind, bewirken eine Hub- und Senkbewegung von Barriere (12) und Meßkopf (10).

Die Vorrichtung arbeitet folgendermaßen :

Innerhalb eines Einlegerahmens wird das streifenförmige Meßgut auf ein bandförmiges Transportmittel, vorzugsweise aus Papier, gelegt, wodurch der Antrieb des Transportbandes in Gang gesetzt wird, so daß der Teststreifen auf den Meßkopf zubewegt wird. Die Meßeinrichtung wird soweit abgesenkt, daß zwischen Barriere und Transportband ein paralleler Spalt verbleibt, dessen Höhe geringer als die Dicke des Meßgutes ist. Das Band befördert den Teststreifen gegen die Barriere und läuft noch eine gewisse Strecke nach, damit der Teststreifen an der Barriere anliegt und dadurch parallel zum Meßkopf ausgerichtet wird. Wird nun der Meßkopf, der von zwei Justiergreifern getragen wird, weiter auf den Teststreifen abgesenkt, drückt die Schräge (16) des Greifers den auf dieser Seite über das Band hinausragenden Teststreifen in seiner Längsrichtung und Querrichtung zum Band unter die Meßkanäle des Meßkopfes. Eine Lagerung der Pleuel (14) in Kugelbüchsen bewirkt eine exakte Führung des Meßkopfes. In dieser Position kann das Meßgut durch Anpressen fixiert und die Messung ausgeführt, beispielsweise das Reflexvermögen der Testbezirke gemessen werden. Nach der Messung bewegen sich Meßkopf und Barriere nach oben. Das Band transportiert den gemessenen Teststreifen weiter in Richtung Aufwickelstation, wo der Teststreifen zusammen mit dem Band aufgewickelt wird. Nach Ende der Meßserie kann das Band mit der Schneideinrichtung durchgetrennt und die eingewickelten Teststreifen zusammen mit dem Band beseitigt werden, womit ein Höchstmaß an Hygiene gewährleistet ist. Bei Teststreifen, wie sie beispielsweise in der klinischen Diagnostik gebraucht werden, muß zwischen dem Tränken des Streifens mit der Prüfflüssigkeit und der Messung im allgemeinen eine gewisse Zeit, die Inkubationszeit, verstreichen.

Die beschriebene Vorrichtung ermöglicht, das Arbeitstempo auch bei festgelegter Inkubationszeit zu variieren, indem das Transportband mehr oder weniger dicht mit Streifen belegt wird.


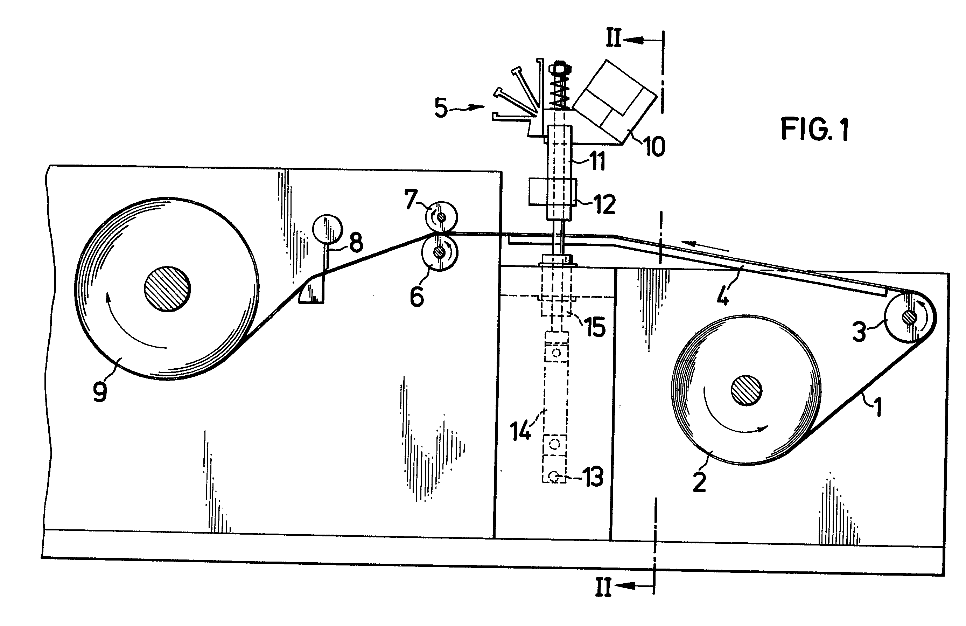

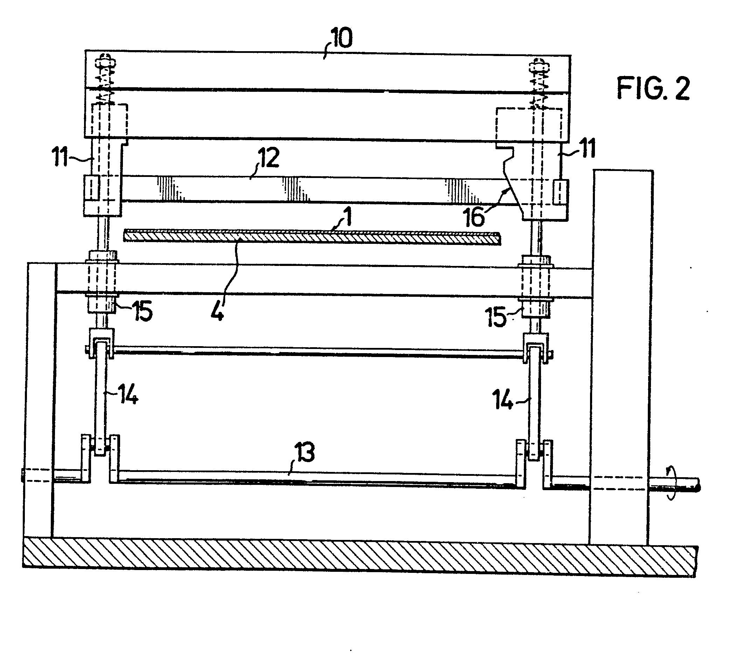

## Patentanspruch

Vorrichtung zum Transport streifenförmiger Objekte in eine definierte Lage unter einer Meßeinrichtung (5) mittels eines Transportbandes (1) zur Aufnahme der Objekte, gekennzeichnet durch eine Kurbelwelle (13), die über Pleuel (14) eine quer zur Bandrichtung angeordnete Barriere (12) in vertikaler Richtung bewegt und zur Ausrichtung der Objekte in Querrichtung zum Transportband (1) auf dieses absenkt, und die eine gegen die Vertikale geneigte Fläche (16) in vertikaler Richtung zur Verschiebung der Objekte in Querrichtung zum Transportband bewegt.

## Claim

A device for the transport of specimens in strip form to a defined position under a measuring apparatus by means of a conveying belt (1) for the specimens, which comprises a crankshaft (13) which via a connecting rod (14) moves vertically a barrier (12) arranged transversally to the direction of the belt and lowers it to that belt for adjusting the specimens in transversal direction to the conveying belt (1), and which moves a cant (16) vertically for displacing the specimens in transversal direction to the conveying belt.

## Revendication

Dispositif pour amener des objets en forme de bande dans une position définie sous un appareil de mesure (5) au moyen d'une courroie transporteuse (1) prévue pour recevoir les objets, caractérisé par un vilebrequin (13) qui, au moyen d'une bielle (14) met en mouvement verticalement une barrière (12) qui est disposée transversalement par rapport à la courroie et s'abaisse sur la courroie pour l'alignement des objets dans la direction transversale par rapport à la courroie de transport (1), et qui met en mouvement une surface (16) inclinée par rapport à la verticale, et ce verticalement pour le déplacement des objets transversalement par rapport à la courroie de transport.

FIG.1

FIG. 2